# EUROPÄISCHE PATENTSCHRIFT

(11) **EP 0 358 901 B1**
(45) Veröffentlichungstag und Bekanntmachung des Hinweises auf die Patenterteilung: **27.01.1993**
(21) Anmeldenummer: 89113761.4
(22) Anmeldetag: 26.07.1989
(51) Int. Cl.: B23B 51/00

(54) **Bohrwerkzeug, insbesondere Metallbohrer**
Boring tool, especially a metal-boring tool
Outil de forage, en particulier foret à métaux

(30) Priorität: 15.09.1988 DE 3831352
(43) Veröffentlichungstag der Anmeldung: 21.03.1990
(73) Patentinhaber: Hertel Aktiengesellschaft Werkzeuge + Hartstoffe, 90766 Fürth (DE)
(72) Erfinder: Krenzer, Ulrich, D-8502 Zirndorf (DE); Heinlein, Pankraz, D-8557 Eggolsheim (DE)
(74) Vertreter: Tergau, Enno, Dipl.-Ing.

(56) Entgegenhaltungen:
- AT-B- 381 052
- AT-B- 383 070
- DE-A- 2 935 389
- DE-A- 3 123 048
- DE-A- 3 124 532
- US-A- 4 244 667

## Beschreibung

Die Erfindung betrifft ein Bohrwerkzeug, welches am Arbeitsende mit auswechselbaren Schneidplatten ausgerüstet ist und in dessen Schaft ein koaxial zur Längsachse sich erstreckender Führungsbohrer eingesetzt ist. Sölche Bohrer sind bekannt und beispielsweise in den DE-A-19 11 594 und DE-A-31 24 532 beschrieben. Als Schneidplatten kommen beispielsweise Wendeschneidplatten aus Hartmetall oder auch aus Hartkeramik in Betracht. Ihr Vorteil ist bekannt; er liegt insbesondere darin, daß die Schneidgeschwindigkeit, Schneidleistung und Standzeit des Bohrwerkzeuges gegenüber herkömmlichen Werkzeugen aus Schnellarbeitsstahl erheblich gesteigert werden kann.

Von wesentlicher Bedeutung für die Standzeit und insbesondere Laufruhe des Bohrwerkzeuges ist auch der Führungsbohrer. Dieser Bohrer besteht je nach Anforderungen aus Schnellarbeitsstahl oder Hartmetall. Der Führungsbohrer hat einen wesentlich kleineren Durchmesser als das Bohrwerkzeug, in den er eingesetzt ist. Das Verhältnis zwischen dem Durchmesser des Führungsbohrers einerseits und dem Durchmesser des Bohrwerkzeuges andererseits beträgt beispielsweise 15-30%. Die Aufgabe des Führungsbohrers besteht darin, eine kleine Führungsbohrung in das Werkstück einzuschneiden, durch welche Querkräfte, die beim Bohren des Hauptloches auf den Bohrer einwirken, aufgefangen werden können. Die Laufruhe und damit auch die Querbelastung und Lebensdauer des Bohrwerkzeuges werden damit erheblich gesteigert. Bei labilen Schnittbedingungen wählt man im allgemeinen Schnellarbeitsstahl als Werkstoff für den Führungsbohrer; bei stabilen Schnittbedingungen wird man sich für Hartmetall entscheiden.

Werkzeuge der vorgenannten Art sind teuere Präzisionsinstrumente, welche beim bestimmungsgemäßen Gebrauch starken Belastungen unterliegen. Beim Konstruieren derartiger Werkzeuge ist deshalb darauf zu achten, daß einerseits diejenigen Werkzeugteile leicht auswechselbar sind, die besonderer Beanspruchung und hohem Verschleiß unterworfen sind, also in erster Linie die erwähnten Schneidplatten sowie der Führungsbohrer. Andererseits muß aber auch Sorge dafür getragen werden, daß die beim Gebrauch entstehenden Späne sowie die zwangsläufig freiwerdende Wärme leicht und störungsfrei abtransportiert und aus der Bohrung entfernt werden können.

Eine besonders günstige Abfuhr der Späne und der Wärme wird bei der Kühlmittelzufuhr durch das Werkzeug erreicht. Als besonders einfache und wirtschaftliche Methode, das Kühlschmiermittel an die Schneide zu führen, hat sich eine koaxiale Bohrung durch den Schaft erwiesen. Diese Bohrung läuft am vorderen Ende des Schaftes mit der Aufnahmebohrung für den Führungsbohrer zusammen. Der Führungsbohrer besitzt an seinem Umfang durchgehende parallel zur Längsachse verlaufende Nuten, über die das Kühlschmiermittel zur Bohrerspitze und somit zu den Schneiden gelangen kann.

Das Vorstehende zeigt, daß die Anforderungen, die an ein Bohrwerkzeug dieser Art gestellt werden, zum Teil widersprüchlich sind. Hohe Belastbarkeit einerseits, leichte Auswechselbarkeit der Verschleißteile andererseits, gepaart mit guter Späne- und Wärmeabfuhr, sind die Forderungen, die miteinander vereint werden müssen.

Aus AT 383 070 B ist weiterhin ein mit Wendeplatten bestücktes Bohrwerkzeug bekannt, dessen Wendeplattenträger abnehmbar ist. Er ist über eine ebene Endfläche gegenüber dem Schaft mittels Halteschrauben verspannt. Die Drehmomentübertragung zwischen Schaft und Kopfteil erfolgt dort beim Bohren nur durch einen Formschluß des Schaftes und des Kopfteils mit den Halteschrauben und durch die Reibung, die durch den im Endflächenbereich wirksamen Anpreßdruck erzeugt wird. Die Zentrierung des Kopfteils wird dort über die Haltemittel vorgenommen.

Der Erfindung liegt die Aufgabe zugrunde, die vorbekannten Bohrwerkzeuge mit auswechselbaren Schneidplatten und koaxial zur Längsachse sich erstreckendem Führungsbohrer in einfacher Weise weiter zu verbessern, um die Schneidleistung und Lebensdauer sowie auch die Bedienungsfreundlichkeit dieser Bohrer zu erhöhen.

Die Lösung dieser Aufgabe ist Gegenstand des Anspruchs 1. Durch eine derartig mehrteilige Ausgestaltung der Bohrwerkzeuge wird erreicht, daß bei eingetretenem Verschleiß, insbesondere aber nach dem Bruch einer Wendeplatte, leicht und mit wenigen Griffen der Bohrkopf gegen einen neuen ausgetauscht werden kann, wobei der abgenommene Bohrkopf dann regeneriert werden kann. Unter "Regenerieren" des Bohrkopfes wird dabei der Austausch oder die Umgruppierung der Schneidplatten, beispielsweise der Wendeschneidplatten, verstanden. Auch kann bei dieser Gelegenheit eine Reinigung und Überartbeitung des gesamten

Bohrkopfes stattfinden und es ist leicht möglich, auch den Führungsbohrer auszutauschen. Die erwähnte Formschlußverbindung hat die Aufgabe, die beim Gebrauch des Werkzeuges entstehenden Schnittmomente aufzufangen und auf den Schaft zu übertragen. Die Formschlußverbindung bringt zusätzlich noch den Vorteil mit sich, daß innerhalb gewisser Grenzen auf einen gegebenen Bohrerschaft Bohrköpfe mit verschiedenen Bohrdurchmessern aufgesetzt werden können. Hierdurch wird eine Reduzierung von Lagerhaltungskosten sowie eine hohe Flexibilität in der Fertigung erreicht. Zum Zentrieren des Bohrkopfes dient der Führungsbohrer, wodurch aufwendigere Zentriervorrichtungen entfallen und die Verwendung einfacher Formschlußverbindungen möglich ist. Die Öffnung im Bohrkopf, durch die der Führungsbohrer hindurchgreift, wird so groß gewählt, daß sich der Bohrkopf in jedem Falle voll in der Verzahnung abstützt. Das sich dadurch ergebende Mindestspiel zwischen Öffnungs- und Führungsbohrer schlägt sich zwar als geringe Durchmessertoleranz am Gesamtwerkzeug nieder, dies ist jedoch in aller Regel kein nennenswertes Problem, da mit den heutigen Fertigungsmethoden sehr kleine Toleranzen erreichbar sind.

Das Bohrwerkzeug weist noch eine weitere Besonderheit auf, die darin besteht, daß im Schaft des Bohrwerkzeuges eine in radialer Richtung verstellbare Schraube angeordnet ist, die mit ihrem kegeligen Fußstück in eine schrägwandige Einkerbung des Führungsbohrers eingreift, wodurch der Führungsbohrer in Richtung seiner Längsachse verstellbar ist. Der Führungsbohrer kann dadurch in eine optimale Lage gebracht werden, welche je nach auftretender Querbelastung unterschiedlich ist. Ist die optimale Lage eingestellt, so wird der Führungsbohrer in an sich bekannter Weise mit Hilfe einer spannschraube festgelegt.

Die Formschlußverbindung zwischen Schneidkopf und Schaft besteht vorteilhafterweise aus ineinandergreifenden und parallel zueinander angeordneten Zahnen, die mit wenigstens einer Spannschraube in Eingriff gehalten werden. Es hat sich gezeigt, daß eine einfach herzustellende Parallelverzahnung den hier zu stellenden Anforderungen bestens genügt. Parallelverzahnungen sind auf automatischen Bearbeitungsmaschinen verhältnismäßig problemlos herzustellen; andererseits sorgt die ohnehin erforderliche Spannschraube für sauberen Paßsitz der Verbindung.

Durch die vorgeschlagene Parallelverzahnung wird eine starre, spielfreie Verbindung des Bohrkopfes mit dem Schaft gewährleistet. Diese Verbindung mit ihrem hohen flächentragenden Anteil garantiert neben hoher Genauigkeit auch geringe Flächenpressungen und verhindert das Auftreten von Schwingungen.

Wie bereits gesagt, kommt im Hinblick auf die Späne- und Wärme-Abfuhr der Spanleitnut erhöhte Bedeutung zu. Es wurde erkannt und wird hiermit vorgeschlagen, abweichend von vorbekannten Bohrern dieser Art im Schaft des Bohrwerkzeuges nur eine einzige Spanleitnut anzuordnen. Der Schaft des Bohrers ähnelt somit einer eingängigen Förderschnecke. Die Anordnung nur einer einzigen Spanleitnut macht es nun möglich, diese Nut ohne Überschreitung der Schaftbelastbarkeit optimal zu gestalten. Hierzu wird vorgeschlagen, daß der Kern des Schaftes einen Durchmesser von 25% bis maximal 50% des Schaftdurchmessers hat. Es ergibt sich so ein Kern mit verhältnismäßig großer Steifigkeit.

Des weiteren wird vorgeschlagen, daß der Drallwinkel der Spanleitnut 45-60° beträgt. Auch ein derartiger extrem großer Drallwinkel trägt zur schnellen und störungsfreien Ableitung der entstehenden heißen Metallspäne bei. Schließlich wird vorgeschlagen, daß die Breite der Spanleitnut dem 0,7- bis 1,3-fachen der Breite des zwischen den Nutenwindungen verbleibenden Schaftsteges entspricht. Die einzige Spanleitlut, die in den Schaft eirgearbeitet ist, verzweigt sich unmittelbar vor dem Schneidkopf in zwei Spanleitnuten mit unterschiedlicher Drallsteigung, was sicherstellt, daß sämtliche Späne störungsfrei in die Nut eingeleitet werden. Das bemerkenswerte Zusammenwirken der aufgeführten Merkmale, nämlich der mehrteiligen Ausgestaltung des Werkzeugvorderteiles einerseits sowie der speziellen Ausgestaltung der Späneleitnut andererseits führen zu einem Bohrwerkzeug, welches trotz erheblicher Länge eine gegenüber bekannten Werkzeugen deutlich gesteigerte Lebensdauer aufweist. Die Verbesserungen sind derart, daß mit Werkzeugen der geschilderten Art, Bohrtiefen bis zu 8 x d, in Extremfällen auch bis über 10 x d möglich sind (d = Durchmesser). Die Auslegung der Spanleitnut bewirkt im übrigen eine besonders günstige Schwingungsdämpfung gegenüber konventionellen mehrnutigen Ausführungen.

Wie erwähnt, kommt der Formschlußverbindung zwischen Schneidkopf und Schaft erhebliche Bedeutung zu. Im Rahmen der Erfindung wird eine Parallelverzahnung zwischen beiden Teilen als optimal bevorzugt. Allerdings muß betont werden, daß auch andere Formschlußverbindungen, beispielsweise HIRTH-Verzahnungen oder auch einfache Nut-Span-Verbindungen möglich sind, wenngleich sie auch meist entweder in wirtschaftlicher oder in technischer Hinsicht nicht so vorteilhaft sind wie die beschriebene Parallelverzahnung.

Die Erfindung wird im folgenden anhand der beigefügten Zeichnung näher erläutert. Es stellen dar:
Fig. 1 eine perspektivische Ansicht einer Ausführungsform des erfindungsgemäßen Bohrwerkzeuges;
Fig. 2 und 3 eine vergrößerte Darstellung des Bohrwerkzeuges gemäß Fig. 1 mit abgenommenem Schneidkopf;
Fig. 4 eine vergrößerte perspektivische Darstellung eines Teiles des Bohrwerkzeugschaftes mit aufgezweigter Wendelnut;
Fig. 5 Längsschnitt eines Teiles des vorderen Schaftendes mit Einstellschraube für den Führungsbohrer.

Das in der Zeichnung dargestellte Bohrwerkzeug ist als Ganzes mit (1) bezeichnet. Es besteht aus dem Schaft (2) mit seinem Maschinenende (3) und seinem Arbeitsende (4). Das Arbeitsende (4) ist mit auswechselbaren Schneidplatten (5), beispielsweise mit Wendeschneidplatten aus Hartmetall, Hartkeramik od.dgl. ausgerüstet. Des weiteren ist in den Schaft ein koaxial zur Längsachse sich erstreckender Führungsbohrer (6) eingesetzt. Dieser Führungsbohrer steckt in einer präzise gearbeiteten Längsbohrung und er wird durch Spannschrauben (7) festgeklemmt.

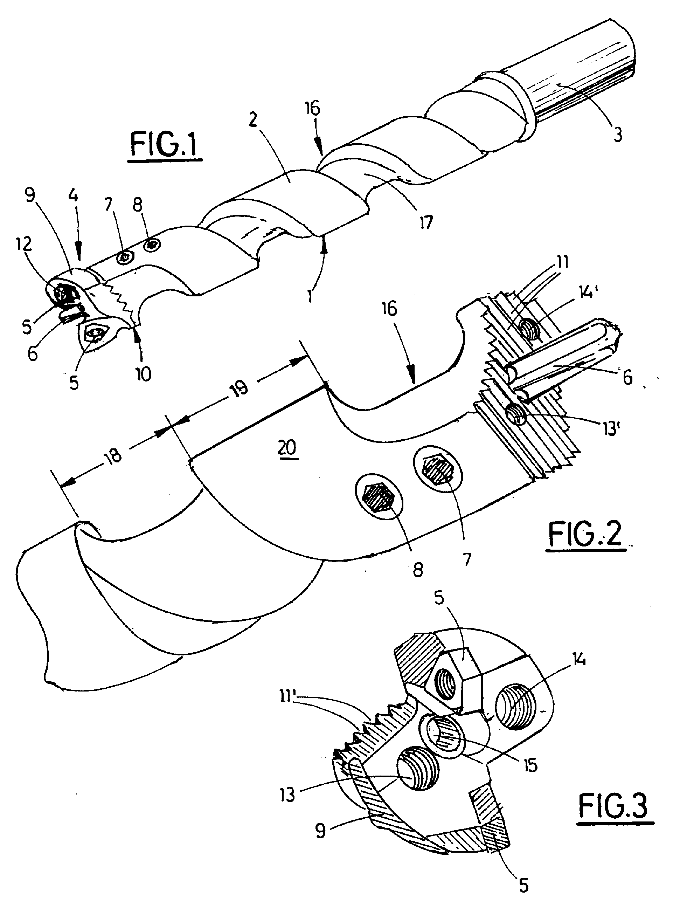

Erfindungsgemäß sind die Schneidplatten (5) in einem abnehmbaren Schneidkopf (9) angeordnet, der über eine Formschlußverbindung (10) mit dem Schaft (2) des Bohrwerkzeuges gekuppelt ist. Im dargestellten Ausführungsbeispiel ist diese Formschlußverbindung eine Parallelverzahnung. Sie besteht aus ineinandergreifenden und parallel zueinander angeordneten Zähnen (11,11′), die mit wenigstens einer Spannschraube (12) in Eingriff gehalten werden. Bei der in den Fig. 2 und 3 vergrößert dargestellten Ausführungsformen sind Bohrunen (13,13′ und 14,14′) für die Aufnahme von zwei Spannschrauben vorgesehen.

Zur genauen Positionierung des Schneidkopfes (9) am Arbeitsende des Schaftes (2) ist die Anordnung so getroffen, daß der Führungsbohrer (6) durch eine Öffnung (15) des Schneidkopfes hindurchgreift, wobei der Innendurchmesser der Öffnung (15) mit kleiner Toleranz dem Außendurchmesser des Führungsbohrers angepaßt ist und der Schneidkopf dadurch positioniert wird.

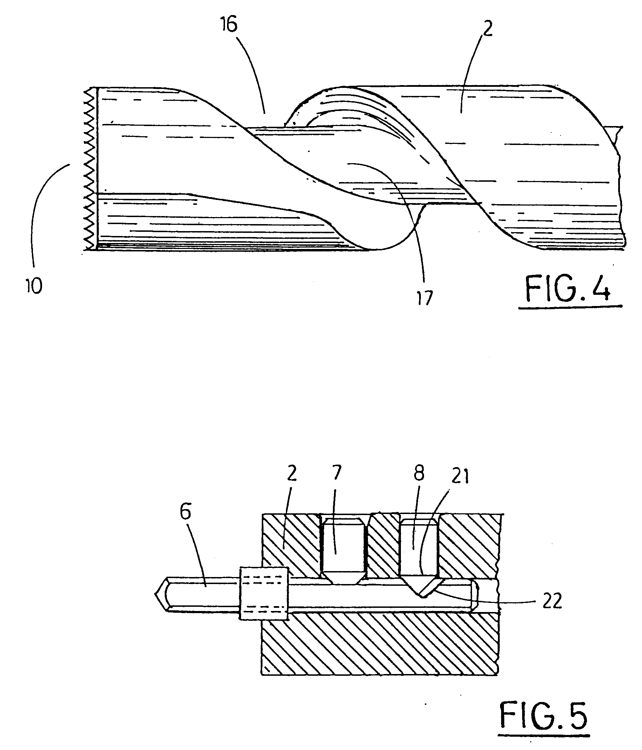

Fig. 1 läßt erkennen, daß der Schaft (2) des Bohrwerkzeuges nur eine einzige Spanleitnut (16) aufweist. Diese Spanleitnut teilt sich allerdings am vorderen Ende des Schaftes in zwei Einzelnuten, von der je eine zu einer Schneidstelle führt. Die Aufteilung der Nut ist in Fig. 4 dargestellt.

Die Spanleitnut (16) ist in besonderer Weise dimensioniert, so daß eine optimale Abführung auch großer Spanmengen gewährleistet ist. Die wesentlichen Merkmale der Dimensionierung bestehen darin, daß der Kern (17) einen Durchmesser von 25% bis maximal 50% des Schaftdurchmessers aufweist. Außerdem beträgt der Drallwinkel der Spanleitnut (16) 45° bis 60°. Schließlich entspricht die Breite (18) der Spanleitnut dem 0,7- bis 1,3-fachen der Breite (19) des zwischen den Nutenwindungen verbleibenden Schaftsteges (20).

In Fig. 5 ist nochmals das vordere Ende des Schaftes (2) schematisch angedeutet. Im Schaft ist der Führungsbohrer (6) befestigt und zwar mittels der Spannschraube (7). Im Schaft ist außerdem eine in radialer Richtung verstellbare Schraube (8) angeordnet, die mit ihrem kegeligen Fußstück (21) in eine schrägwandige Einkerbung (22) des Führungsbohrers (6) eingreift, wodurch der Führungsbohrer in Richtung seiner Längsachse verstellbar ist. Die Verstellung geschieht naturgemäß bei gelockerter Spannschraube (7); ist die gewünschte Lage des Führungsbohrers erreicht, wird diese durch Anziehen der Spannschraube (7) fixiert.

## Patentansprüche

1. Bohrwerkzeug (1) das am Arbeitsende mit auswechselbaren Schneidplatten (5) ausgerüstet ist und in dessen Schaft (2) ein koaxial zur Längsachse sich erstreckender Führungsbohrer (6) eingesetzt ist,
dadurch gekennzeichnet,
daß die Schneidplatten (5) in einem abnehmbaren Schneidkopf (9) angeordnet sind, der über eine Formschlußverbindung (10) mit dem Schaft (2) des Bohrwerkzeuges gekuppelt ist, daß der Führungsbohrer (6) durch eine Öffnung (15) des Schneidkopfes (9) hindurchgreift, wobei der Innendurchmesser der Öffnung (15) mit kleiner Toleranz dem Außendurchmesser des Führungsbohrers (6) angepaßt ist und daß im Schaft (2) eine in radialer Richtung verstellbare Schraube (8) angeordnet ist, die mit ihrem kegeligen Fußstück (21) in eine schrägwandige Einkerbung (22) des Führungsbohrers (6) eingreift, wodurch der Führungsbohrer in Richtung seiner Längsachse verstellbar ist.

2. Bohrwerkzeug nach Anspruch 1,
dadurch gekennzeichnet
daß die Formschlußverbindung (10) aus ineinandergreifenden und parallel zueinander angeordneten Zähnen (11, 11′) besteht, die mit wenigstens einer Spannschraube (12) in Eingriff gehelten werden.

3. Bohrwerkzeug nach Anspruch 1 oder 2,
dadurch gekennzeichnet
daß der Schaft (2) des Bohrwerkzeuges (1) nur eine einzige Spanleitnut (16) aufweist, die sich unmittelbar vor dem Schneidkopf in zwei Spanleitnuten mit unterschiedlicher Drallsteigung verzweigt.

4. Bohrwerkzeug nach Anspruch 3,
dadurch gekennzeichnet
daß der Kern (17) des Schaftes (2) einen Durchmesser von 25% bis maximal 50%, vorzugsweise 30% bis 40% des Schaftdurchmessers aufweist.

5. Bohrwerkzeug nach Anspruch 3 oder 4,
dadurch gekennzeichnet
daß der Drallwinkel der Spanleitnut (16) 45° bis 60° beträgt.

6. Bohrwerkzeug nach einem der Anspruche 3 bis 5,
dadurch gekennzeichnet
daß die Breite (18) der Spanleitnut (16) dem 0,7- bis 1,3-fachen der Breite (19) des zwischen den Nutenwindungen verbleibenden Schaftsteges (20) entspricht.

## Revendications

1. Outil de perçage (1) qui est équipé de plaquettes de coupe interchangeables (5) à son extrémité de travail et dans le fût (2) duquel est encastré un foret pilote (6) qui s'étend coaxialement à son axe longitudinal,
caractérisé
en ce que les plaquettes de coupe (5) sont agencées dans une tête de coupe amovible (9) qui est accouplée au fût (2) de l'outil de perçage par une liaison (10) par sûreté de forme, en ce que le foret pilote (n) traverse une ouverture (15) de la tête de coupe (9), le diamètre intérieur de l'ouverture (15) étant adapté au diamètre extérieur du foret pilote (6) avec une tolérance réduite et en ce que, dans le fût (2), est agencée une vis (8) réglable dans la direction radiale, qui est engagée par sa pièce de pied conique (21) dans une encoche (22) à parois obliques du foret pilote (6), et au moyen de laquelle le foret pilote peut être réglé selon son axe longitudinal.

2. Outil de perçage selon la revendication 1,
caractérisé
en ce que la liaison (10) par sûreté de forme est composée de dents (11, 11′) entrant en prise les unes dans les autres, gui sont disposées parallèlement entre elles, et gui sont maintenues en prise à l'aide d'au moins une vis de serrage (12).

3. Outil de perçage selon la revendication 1 ou 2,
caractérisé
en ce que le fût (2) de l'outil de perçage (1) ne présente qu'une seule goujure (16) d'évacuation des copeaux qui se divise, immédiatement avant d'atteindre la tête de coupe, en deux goujures d'évacuation des copeaux possédant des pentes d'hélice différentes.

4. Outil de perçage selon la revendication 3,
caractérisé
en ce que l'âme (17) du fût (2) présente un diamètre représentant de 25 % à 50 % au maximum, de préférence de 30 % à 40 % du diamètre du fût.

5. Outil de perçage selon la revendication 3 ou 4,
caractérisé
en ce que l'angle d'hélice de la goujure (16) d'évacuation des copeaux est de 45° à 60°.

6. Outil de perçage selon une des revendications 3 à 5,
caractérisé
en ce que la largeur (18) de la goujure (16) d'évacuation des copeaux correspond à une proportion de 0,7 à 1,3 fois la largeur (19) de la partie pleine (20) du fût qui subsiste entre les spires de la goujure.

## Claims

1. Drilling tool (1), which is equipped at its working end with exchangeable cutting tips (5) and into whose shank (2) a pilot drill (6) extending coaxially to the longitudinal axis is inserted, characterised in that the cutting tips (5) are disposed in a detachable cutting head (9) which is coupled by a positive connection (10) to the shank (2) of the drilling tool; in that the pilot drill (6) passes through an opening (15) in the cutting head (9), the inside diameter of the opening (15) being adapted with close tolerance to the outside diameter of the pilot drill (6); and in that in the shank (2) a screw (8) is disposed which is adjustable in the radial direction and by its conical foot part (21) engages in a notch (22) which is formed in the pilot drill (6) and has an inclined wall, whereby the pilot drill is adjustable in the direction of its longitudinal axis.

2. Drilling tool according to Claim 1, characterised in that the positive connection (10) consists of interengaging teeth (11, 11′) which are disposed parallel to one another and which are held in engagement by at least one locking screw (12).

3. Drilling tool according to Claim 1 or 2, characterised in that the shank (2) of the drilling tool (1) has only a single chip guide flute (16), which directly in front of the cutting head branches into two chip guide flutes having different helix leads.

4. Drilling tool according to Claim 3, characterised in that the core (17) of the shank (2) has a diameter of from 25% to a maximum of 50%, preferably 30% to 40%, of the diameter of the shank.

5. Drilling tool according to Claim 3 or 4, characterised in that the helix angle of the chip guide flute (16) amounts to from 45° to 60°.

6. Drilling tool according to one of Claims 3 to 5, characterised in that the width (18) of the chip guide flute (16) corresponds to from 0.7 to 1.3 times the width (19) of the shank land (20) remaining between the flute turns.
